# EUROPÄISCHE PATENTSCHRIFT

(11) **EP 2 266 817 B1**
(45) Veröffentlichungstag und Bekanntmachung des Hinweises auf die Patenterteilung: **26.10.2011**
(21) Anmeldenummer: 10164112.4
(22) Anmeldetag: 27.05.2010
(51) Int. Cl.: B60B 27/00

(54) **Radlagerung für Fahrzeugachsen**
Wheel bearing for vehicle axles
Palier de roue pour axes de véhicules

(30) Priorität: 22.06.2009 DE 102009027078
(43) Veröffentlichungstag der Anmeldung: 29.12.2010
(73) Patentinhaber: SAF-HOLLAND GmbH, 63856 Bessenbach (DE)
(72) Erfinder: Weigand, Werner, 63856, Bessenbach (DE); Dohrmann, Claas, 27246, Borstel (DE)
(74) Vertreter: Bauer, Clemens

(56) Entgegenhaltungen:
- EP-A1- 1 286 064
- WO-A2-2005/050031
- US-A- 5 795 037
- US-A1- 2004 207 248
- US-A1- 2007 052 287

## Beschreibung

Die vorliegende Erfindung bezieht sich auf eine Radlagerung für Fahrzeugachsen, insbesondere eines Nutzfahrzeugs oder einer Landmaschine.

Derartige Radlagerungen für Fahrzeugachsen sind hinlänglich aus dem Stand der Technik bekannt. So offenbart beispielsweise die DE 199 13 024 A1 eine Radlagerung für Fahrzeugachsen mit einer auf einem Achsschenkel über Wälzlager drehbar gelagerten Nabe, die durch eine auf das freie Ende des Achsschenkels aufgeschraubte Achsmutter gehalten ist. Problematisch bei derartigen Radlagerungen ist jedoch, dass diese sich im Einsatzbetrieb aufgrund von auftretenden Vibrationen und während der Fahrt auf die Achsmutter wirkenden Momenten lösen können, sodass die Radnabeneinheit nicht mehr sicher am Achskörper befestigt ist und somit das Fahrzeug Gefahrensituationen ausgesetzt ist. Die gattungsgemäße US-2004/0207248 A1, die US-5,795,037 sowie die US-2007/0052287 A1 zeigen Radlagerungen für Fahrzeugachsen mit einem Achskörper, einer Radnabeneinheit bestehend aus einem Kegellager, die am Achskörper angeordnet ist, und einem Befestigungselement, um die Radnabeneinheit an dem Achskörper festzulegen, wobei eine Scheibe zwischen Befestigungselement und Radnabeneinheit vorgesehen ist.

Die WO 2005/050031 A2 und die EP 1 286 064 A1 betreffen Anordnungen aus einer Mutter und einer Scheibe, welche derart ausgebildet sind, dass diese zueinander nicht drehbar sind.

Es ist daher Aufgabe der vorliegenden Erfindung, eine Radlagerung für Fahrzeugachsen, insbesondere eines Nutzfahrzeugs oder einer Landmaschine, vorzusehen, die vibrationsunempfindlich ist und eine sichere Befestigung der Radnabeneinheit unabhängig von auf die Radlagerung wirkenden Lösemomenten gewährleistet.

Diese Aufgabe wird durch eine Radlagerung für Fahrzeugachsen, insbesondere eines Nutzfahrzeugs oder einer Landmaschine, mit den Merkmalen des Anspruchs 1 gelöst. Bevorzugte Ausführungsformen ergeben sich aus den abhängigen Ansprüchen.

Erfindungsgemäß ist eine Radlagerung für Fahrzeugachsen, insbesondere eines Nutzfahrzeugs oder einer Landmaschine, vorgesehen, umfassend einen Achskörper, eine Radnabeneinheit, die am Achskörper angeordnet ist, ein Befestigungselement, um die Radnabeneinheit an dem Achskörper festzulegen, und ein Zwischenelement, wobei das Zwischenelement verdrehsicher am Achskörper angeordnet und zwischen Befestigungselement und Radnabeneinheit vorgesehen ist. Die Radlagerung dient somit insbesondere zur Lagerung eines Rads an einer Fahrzeugachse bzw. einem Achskörper eines Kraftfahrzeugs, insbesondere eines Landfahrzeugs. Dies sind insbesondere beispielsweise Sattelanhänger, welche von einem Lastkraftwagen gezogen werden, um schwere Lasten zu transportieren, oder Nutzfahrzeuge in Form von Lastkraftwagen selbst. Die Radlagerung bzw. Radnabeneinheit kann hierbei zweckmäßigerweise an einem Ende bzw. Endbereich des Achskörpers, wie einem Achsstummel angeordnet sein. Der Achsstummel kann ein integraler bzw. einstückiger Bestandteil des Achskörpers bzw. der Fahrzeugachse sein. Die Fahrzeugachse ist derart im Fahrzeug angeordnet, dass diese sich relativ zum Fahrzeug nicht dreht bzw. rotiert. In anderen Worten ist der Achskörper zweckmäßigerweise nicht als sich drehende Welle ausgebildet. Dies ist erforderlich, da ein Bremssystem an dem Achskörper angeordnet sein kann, sodass sich vom drehenden Rad einwirkende Bremsmoment in den Achskörper übertragen werden können und von diesem in das Fahrzeug bzw. Fahrgestell eingeleitet werden können. Zweckmäßigerweise ist eine Radnabeneinheit vorgesehen, an welcher das Fahrzeugrad bzw. der Reifen angeordnet ist. Die Radnabeneinheit ist hierbei über ein Befestigungselement zweckmäßigerweise an einer distalen Seite des Achskörpers befestigt. Besonders vorteilhafterweise sind zwei derartige Radlagerungen an einem Achskörper vorgesehen, nämlich an beiden (d.h. links und rechts) Endbereichen des Achskörpers. Mittels des Befestigungselements wird die Radnabeneinheit an dem Achskörper festgelegt. Hierbei weist die Radnabeneinheit einen Bereich (Radnabe) auf, welcher sich in Relation zum Achskörper dreht sowie einen zweiten Bereich (innerer Lagerring), welcher im Wesentlichen ortsfest zu dem Achskörper angeordnet bzw. festgelegt ist. In anderen Worten soll keine oder lediglich eine sehr geringe Relativbewegung zwischen dem unveränderlichen Teil (innerer Lagerring) der Radnabeneinheit und dem Achskörper erfolgen. Erfindungsgemäß ist ein Zwischenelement vorgesehen, welches verdrehsicher bzw. nicht verdrehbar bzw. nicht rotierbar um die Längsachse des Achskörpers an diesem angeordnet bzw. festgelegt bzw. fixiert ist. In anderen Worten ist das Zwischenelement am Achskörper unverdrehbar angeordnet bzw. rotatorisch gesichert. Ferner ist das Zwischenelement zwischen dem Befestigungselement und der Radnabeneinheit vorgesehen bzw. angeordnet. Infolgedessen kann eine axiale Kraft bzw. in Achsrichtung bzw. entlang der Längsachse des Achskörpers wirkende Kraft von dem Befestigungselement über das Zwischenelement auf die Radnabeneinheit - insbesondere deren inneren Lagerring - übertragen werden, welche sich wiederum beispielsweise über eine Stufe an dem Achskörper abstützt. Eine axiale Krafteinleitung vom Zwischenelement direkt in den Achskörper, d.h. ohne zwischengeschaltete Radnabeneinheit, findet vorteilhafterweise nicht statt. In anderen Worten liegt das Zwischenelement in axialer Richtung gesehen zweckmäßigerweise nicht an dem Achskörper an, sondern an einer Stirnwandung der Radnabeneinheit bzw. deren inneren Lagerring. Durch eine derartige Konfiguration wird gewährleistet, dass das Befestigungselement von sämtlichen im Fahrbetrieb wirkenden Momenten entkoppelt ist und darüber hinaus ein Lösen des Befestigungselements über eine Kombination aus Flächenreibung zwischen Befestigungselement und Zwischenelement und Formschluss zwischen Zwischenelement und Achskörper verhindert wird. Die im Fahrbetrieb vom Rad erzeugten Momente, welche über die Radnabe in das Befestigungselement übertragen werden würden und bei einer der Gewinderichtung des Befestigungselements entgegengesetzten Drehrichtung zum Lösen des Befestigungselements führen würden, werden erfindungsgemäß über die Reibung von der Radnabe in das Zwischenelement übertragen, welches diese wiederum über die verdrehsichere Anordnung in den Achskörper überträgt. Hierdurch wird erreicht, dass das Befestigungselement von durch den Fahrbetrieb erzeugten (Löse-) Momenten entkoppelt wird und im Fahrbetrieb erzeugte Vibrationen und andere Einflussfaktoren kompensiert werden. Ein Lösen des Befestigungselements wird verhindert, indem die auf das Befestigungselement wirkenden Lösemomente über die Reibung zwischen dem Befestigungselement und dem Zwischenelement in dieses übertragen werden, welches diese wiederum aufgrund der verdrehsicheren Anordnung in den Achskörper überträgt.

Vorteilhafterweise ist das Zwischenelement als ringförmiger Körper ausgebildet. In anderen Worten kann das Zwischenelement als scheibenartiger Körper ausgebildet sein. Dieser weist zweckmäßigerweise in dessen Mitte eine Öffnung bzw. einen Durchbruch auf, durch welchen sich der Achskörper hindurch erstrecken kann. Die Öffnung bzw. der Durchbruch weist zweckmäßigerweise eine Konfiguration auf, welche der Konfiguration des Achskörpers entspricht. Insbesondere ist der Innenumfang des Zwischenelements im Wesentlichen kongruent zum Außen- bzw. Mantelumfang des Achskörpers ausgebildet. Der Außenumfang des Zwischenelements kann hierbei derart bemessen sein, dass sich das Zwischenelement und ein innerer Lagerring der Radnabeneinheit zumindest bereichsweise in radialer Richtung überlappen.

Vorzugsweise ist das Zwischenelement axial verschieblich am Achskörper geführt. In anderen Worten kann das Zwischenelement entlang der Längserstreckung bzw. Längsachse bzw. Längsrichtung des Achskörpers versetzt bzw. verlagert werden. Diese Verschieblichkeit ist vorteilhafterweise zumindest bereichsweise entlang des Achskörpers möglich, insbesondere im Endbereich desselben, in welchem ein Eingriffsabschnitt für das Befestigungselement vorgesehen sein kann.

In einer bevorzugten Ausführungsform weist das Zwischenelement an seinem Innenumfang ein Eingriffsmittel auf, welches ausgelegt ist, mit einem Eingriffsmittel am Achskörper in Eingriff zu gelangen. Die Eingriffsmittel können hierbei integral bzw. einstückig mit dem Zwischenelement bzw. dem Achskörper ausgebildet sein oder auch getrennt hiervon bzw. mehrteilig. Durch die Eingriffsmittel wird sichergestellt, dass das Zwischenelement besonders verdrehsicher am Achskörper angeordnet werden kann.

Zweckmäßigerweise ist das Eingriffsmittel des Zwischenelements als zumindest ein radialer Vorsprung und das Eingriffsmittel des Achskörpers als zumindest ein radialer Rücksprung ausgebildet. Es versteht sich, dass eine Konfiguration, in welcher das Eingriffsmittel des Zwischenelements als zumindest ein radialer Rücksprung und das Eingriffsmittel des Achskörpers als zumindest ein radialer Vorsprung ausgebildet ist oder Mischformen hiervon ebenfalls vorgesehen sein können und gleichwertig und gleichwirkend hierzu sind. Der radiale Vorsprung und der radiale Rücksprung sind hierbei zweckmäßigerweise im Wesentlichen kongruent bzw. passend zueinander hinsichtlich Form und Größe ausgebildet. In einer besonders vorteilhaften Ausführungsform können ebenfalls eine Vielzahl von vorzugsweise gleichmäßig über den Umfang verteilte Eingriffsmittel vorgesehen sein. Es versteht sich, dass die Eingriffsmittel hinsichtlich Form und Größe beliebig gestaltet sein können. Insbesondere kann der Vorsprung derart weit hervorragen, dass das Verhältnis zwischen dem über den Innenumfang des Zwischenelements bzw. Außenumfang des Achskörpers hervorragenden Vorsprung und dem Außenumfang des Achskörpers bzw. Innenumfang des Zwischenelements zwischen 0,1 und 0.001. vorzugsweise zwischen 0,07 und 0,02 und besonders vorzugsweise etwa 0.05 beträgt.

Vorteilhafterweise ist das Eingriffsmittel des Achskörpers als sich axial erstreckende Nut bzw. axial erstreckender Vorsprung ausgebildet. Besonders vorteilhafterweise kann der radiale Rücksprung als sich axial erstreckende Nut ausgebildet sein. Die Nut oder der Vorsprung können sich bis zum Stimende des Achskörpers erstrecken oder nur über eine definierte Strecke.

Erfindumgsgemäß weist die Radnabeneinheit einen inneren Lagerring auf, an welchem über wenigstens einen Lagerkörper drehbar ein äußerer Lagerring bzw. eine Radnabe angeordnet ist. Der Lagerkörper ist hierbei zweckmäßigerweise als Wälzkörper ausgebildet, der eine zylindrische oder kegel (-stumpf) -förmige Konfiguration aufweisen kann. Der innere Lagerring kann hierbei einteilig ausgebildet sein oder aus mehreren, zweckmäßigerweise sich axial aneinanderreihenden Teilen bestehen, die über Klammerelemente miteinander verbunden sind.

Erfindungsgemäß sind das Zwischenelement und der innere Lagerring verdrehsicher miteinander verbunden. Hierdurch wird nicht nur eine rotatorische Festlegung des Zwischenetements am Achskörper gewährleistet, sondern ebenfalls der innere Lagerring der Radnabeneinheit in rotatorische Richtung in Relation zum Achskörper festgelegt. Infoigedessen kann ein "Wandern" des inneren Lagerrings auf dem Achskörper vermieden werden, wodurch der Verschleiß der Radlagerung vermindert wird. Bei Verwendung eines mehrteiligen inneren Lagerrings können hierfür das Zwischenelement und ein distaler innerer Lagerring verdrehsicher miteinander verbunden sein. Die verdrehsichere Verbindung kann beispielsweise über eine Verschweißung oder Verklebung erfolgen. Auch ist denkbar, die verdrehsichere Verbindung über einen Formschluss und/oder Reibschluss und/oder Stoffschluss zu schaffen.

In einer bevorzugten Ausführungsform ist das Zwischenelement separat von der Radnabeneinheit ausgebildet. In anderen Worten sind Zwischenelement und Radnabeneinheit getrennt voneinander bzw. mehrteilig bzw. mehrstückig ausgebildet. Hierdurch lassen sich vorteilhafterweise Kosten während der Herstellung einsparen.

In einer alternativen Ausführungsform sind das Zwischenelement und der innere Lagerring bzw. dessen distaler Teil der Radnabeneinheit einstückig miteinander ausgebildet. Hierdurch ist eine besonders sichere rotatorische Festlegung des inneren lagerrings in Bezug auf den Achskörper möglich.

In einer bevorzugten Ausführungsform weisen das Befestigungselement und/oder das Zwischenelement im Bereich ihrer Kontaktflächen miteinander eine die Reibung erhöhende Oberflächengestaltung auf. Dies kann zum einen über das Material von Befestigungselement und Zwischenelement selbst und/oder zum anderen über die Gestaltung der Oberfläche bewirkt werden. So können die Kontaktflächen des Zwischenelements mit dem Befestigungselement bzw. des Befestigungselement mit dem Zwischenelement beispielsweise eine raue Oberfläche (z.B. über eine Rändelung) aufweisen. Es ist ebenfalls denkbar, die Kontaktfläche des Befestigungselements mit einer uneben bzw. rau gestalteten Oberflächenkonfiguration zu versehen und das Zwischenelement im Bereich dessen Kontaktflächen aus einem fließfähigen oder weichen Material zu gestalten, sodass zwischen Befestigungselement und Zwischenelement nach Montage der Radlagerung sich das Befestigungselement in das Zwischenelement hineindrückt und einen Formschluss ergibt. Darüber hinaus ist es denkbar, eine adhäsive Verbindung zwischen Befestigungselement und Zwischenelement über einen Klebstoff zu schaffen. Vorzugsweise ist das Befestigungselement als Achsmutter ausgebildet. Diese weist an ihrem Innenumfang ein Gewinde auf, welches mit einem Gewinde am Außenumfang des Achskörpers zusammenwirkt. Es versteht sich, dass das Befestigungselement ebenfalls über einen Bajonettverschluss mit dem Achskörper befestigt werden kann. Das Befestigungselement kann ebenfalls als Klemmring oder Schelle ausgebildet sein.

In einer bevorzugten Ausführungsform ist die Radlagerung an beiden Enden des Achskörpers vorgesehen, wobei das Befestigungselement vorzugsweise - in Fahrtrichtung gesehen - an der linken Achsseite über ein Linksgewinde und an der rechten Achsseite über ein Rechtsgewinde des Achskörpers an diesem festgelegt ist. Hierdurch wird eine zusätzliche Sicherung des Befestigungselements aufgrund der während der Fahrt auf das Befestigungselement wirkende Momente geschaffen.

Weitere Merkmale und Vorteile der Erfindung ergeben sich aus der nachfolgenden Beschreibung von bevorzugten Ausführungsformen der erfindungsgemäßen Radlagerung mit Bezug auf die beigefügten Figuren, wobei einzelne Merkmale von einzelnen Ausführungsformen zu neuen Ausführungsformen miteinander kombiniert werden können. Es zeigen:
- Fig. 1: eine Querschnittsansicht einer bevorzugten Ausführungsform der erfindungsgemäßen Radlagerung.
- Fig. 2: eine Draufsicht einer bevorzugten Ausführungsform eines erfin- dungsgemäßen Zwischenelements.

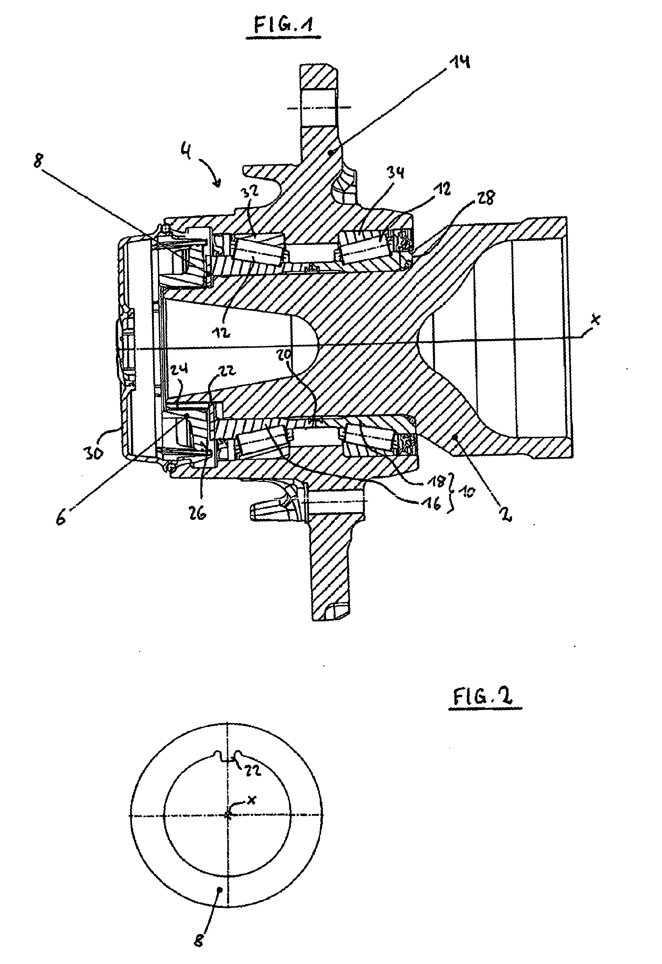

In Fig. 1 ist eine Querschnittsansicht einer beispielhaften bevorzugten Ausführungsform einer erfindungsgemäßen Radlagerung für Fahrzeugachsen dargestellt. Die Radlagerung umfasst einen Achskörper 2, eine Radnabeneinheit 4, ein Befestigungselement 6 sowie ein Zwischenelement 8.

Eine derartige Radlagerung findet vor allem bei schweren Anhängerachsen oder Nutzfahrzeugen Anwendung. Am Ende des Achskörpers 2 bzw. am Achsstummel sitzt eine Lagereinheit. Diese ist in der dargestellten Ausführungsform als geschlossenes Kompaktwälzlager ausgebildet und umfasst einen inneren Lagerring 10, an welchem über Lagerkörper 12 eine Radnabe 14 angeordnet ist. Der innere Lagerring 10 besteht in der dargestellten Ausführungsform aus einem distalen inneren Lagerring 16 und einem proximalen inneren Lagerring 18, welche über einen Klammerring 20 miteinander verbunden sind. Den für beide Lagerhälften identischen äußeren Lagerring kann die Radnabe 14 bilden. In der dargestellten Ausführungsform ist der äußere Lagerring mehrteilig aufgebaut und wird durch zwei axial beabstandete äußere Lagerringe 32, 34 gebildet.

Wie aus Fig. 2 ersichtlich, weist das Zwischenelement 8 an seinem Innenumfang ein als radialer Vorsprung ausgebildetes Eingriffsmittel 22 auf. Das Zwischenelement 8 ist hierbei als ringförmiger Körper ausgebildet, dessen Öffnung im Wesentlichen dem Außenumfang des Achskörpers 2 entspricht, sodass das Zwischenelement 8 auf den Achskörper 2 aufgeschoben werden kann. Hierbei greifen die Eingriffsmittel 22 des Zwischenelements 8 in entsprechende im Endbereich des Achskörpers 2 vorgesehene Eingriffsmittel 24 ein, welche sich als in Richtung der Längsachse x bzw. axial erstreckende Nut ausgebildet sind. Durch den Eingriff der Eingriffsmittel 22, 24 miteinander wird sichergestellt, dass das Zwischenelement 8 verdrehsicher bzw. unverdrehbar bzw. nicht rotierbar am Achskörper 2 angeordnet ist.

Das Befestigungselement 6 kann als Achsmutter ausgebildet sein, die auf das Ende des Achskörpers 2 aufschraubbar ist. Während des Aufschraubens wird das zwischen dem Befestigungselement 6 und dem inneren Lagerring 10 angeordnete Zwischenelement 8 von einem Kragen 26 des Befestigungselements 6 gegen eine distale Stirnseite des inneren Lagerrings 10 gedrückt. In anderen Worten wird eine axiale Kraft vom Kragen 26 des Befestigungselements 6 über das Zwischenelement 8 auf eine distale Stirnseite des inneren Lagerrings 10 übertragen, welcher sich an einer Schulter 28 des Achskörpers 2 abstützt, wodurch der innere Lagerring 10 am Achskörper 2 befestigt wird.

Eine Radkappe 30 verhindert das Eintreten von Schmutz in die Radlagerung. Darüber hinaus kann sich innerhalb der Radkappe 30 eine Fettfüllung zur Schmierung des Radlagersystems befinden.

### Bezugszeichenliste

- 2: Achskörper
- 4: Radnatbeneinheit
- 6: Befestigungselement
- 8: Zwischenelement
- 10: innerer Lagerring
- 12: Lagerkörper
- 14: Radnabe
- 16: distaler innerer Lagerring
- 18: proximaler innerer Lagerring
- 20: Klammerring
- 22: Eingriffsmittel
- 24: Eingriffsmittel
- 26: Kragen
- 28: Schulter
- 30: Radkappe
- 32: distaler äußerer Lagerring
- 34: proximaler äußerer Lagerring
- x: Längsachse

## Patentansprüche

1. Radlagerung für Fahrzeugachsen, insbesondere eines Nutzfahrzeugs oder einer Landmaschine, umfassend
einen Achskörper (2),
eine Radnabeneinheit (4), die am Achskörper (2) angeordnet ist,
ein Befestigungselement (6), um die Radnabeneinheit (4) an dem Achskörper (2) festzulegen, und
ein Zwischenelement (8),
wobei das Zwischenelement (8) verdrehsicher am Achskörper (2) angeordnet und zwischen Befestigungselement (6) und Radnabeneinheit (4) vorgesehen ist, und
wobei die Radnabeneinheit (4) einen inneren Lagerring (10) aufweist, an welchem über wenigstens einen Lagerkörper (12) drehbar ein äußerer Lagerring (32, 34) bzw. eine Radnabe (14) angeordnet ist,
**dadurch gekennzeichnet, dass** das Zwischenelement (8) und der innere Lagerring (10) der Radnabeneinheit (4) verdrehsicher miteinander verbunden sind.

2. Radlagerung nach Anspruch 1, wobei das Zwischenelement (8) als ringförmiger Körper ausgebildet ist.

3. Radlagerung nach einem der vorhergehenden Ansprüche, wobei das Zwischenelement (8) axial verschieblich am Achskörper (2) geführt ist.

4. Radlagerung nach einem der vorhergehenden Ansprüche, wobei das Zwischenelement (8) an seinem Innenumfang ein Eingriffsmittel (22) aufweist, welches ausgelegt ist, mit einem Eingriffsmittel (24) am Achskörper (2) in Eingriff. zu gelangen.

5. Radlagerung nach Anspruch 4, wobei das Eingriffsmittel (22) des Zwischenelements (8) als zumindest ein radialer Vorsprung und das Eingriffsmittel (24) des Achskörpers (2) als zumindest ein radialer Rücksprung ausgebildet ist.

6. Radlagerung nach Anspruch 5, wobei der radiale Rücksprung als sich axial erstreckende Nut ausgebildet ist.

7. Radlagerung nach einem der vorhergehenden Ansprüche, wobei das Zwischenelement (8) separat von der Radnabeneinheit (4) ausgebildet ist.

8. Radlagerung nach einem der vorhergehenden Ansprüche, wobei das Zwischenelement (8) und der innere Lagerring (10) der Radnabeneinheit (4) einstückig miteinander ausgebildet sind.

9. Radlagerung nach einem der vorhergehenden Ansprüche, wobei das Befestigungselement (6) und/oder das Zwischenelement (8) im Bereich ihrer Kontaktflächen miteinander eine die Reibung erhöhende Oberflächengestaltung aufweisen.

10. Radlagerung nach einem der vorhergehenden Ansprüche, wobei das Befestigungselement (6) als Achsmutter ausgebildet ist.

11. Radlagerung nach einem der vorhergehenden Ansprüche, welche an beiden Enden des Achskörpers (2) vorgesehen ist, wobei das Befestigungselement (6) vorzugsweise an der linken Achsseite über ein Linksgewinde und an der rechten Achsseite über ein Rechtsgewinde des Achskörpers an diesem festgelegt ist.

## Claims

1. A wheel bearing for vehicle axles, in particular of a commercial vehicle or an agricultural machine, comprising
an axle body (2),
a hub assembly (4), which is arranged at the axle body (2),
a fastening element (6) to fix the hub assembly (4) to the axle body (2), and
an intermediate element (8),
wherein the intermediate element (8) is arranged untwistably at the axle body (2) and provided between the fastening element (6) and the hub assembly (4), and wherein the hub assembly (4) has an inner bearing ring (10) at which an outer bearing ring (32, 34) or a wheel hub (14), respectively, is arranged rotatably by means of at least one bearing body (12),
**characterized in that** the intermediate element (8) and the inner bearing ring (10) of the hub assembly (4) are connected to one another untwistably.

2. The wheel bearing according to claim 1, wherein the intermediate element (8) is formed as a ring-shaped body.

3. The wheel bearing according to any one of the preceding claims, wherein the intermediate element (8) is guided axially slidable on the axle body (2).

4. The wheel bearing according to any one of the preceding claims, wherein the intermediate element (8) has an engaging means (22) at its inner circumference which is adapted to engage with an engaging means (24) on the axle body (2).

5. The wheel bearing according to claim 4, wherein the engaging means (22) of the intermediate element (8) is formed as at least a radial projection and the engaging means (24) of the axle body (2) is formed as at least a radial recess.

6. The wheel bearing according to claim 5, wherein the radial recess is formed as an axially extending groove.

7. The wheel bearing according to any one of the preceding claims, wherein the intermediate element (8) is formed separately from the hub assembly (4).

8. The wheel bearing according to any one of the preceding claims, wherein the intermediate element (8) and the inner bearing ring (10) of the hub assembly (4) are formed as a single piece.

9. The wheel bearing according to any one of the preceding claims, wherein the fastening element (6) and/or the intermediate element (8) in the area of their mutual contact surfaces have a surface design which increases the friction.

10. The wheel bearing according to any one of the preceding claims, wherein the fastening element (6) is formed as a hub axle nut.

11. The wheel bearing according to any one of the preceding claims, which is provided at both ends of the axle body (2), wherein the fastening element (6) is fixed to the axle body preferably on the left-hand axle side by means of a leftturning thread and on the right-hand axle side by means of a right-turning thread of the axle body.

## Revendications

1. Palier de roue pour essieux de véhicules, en particulier d'un véhicule utilitaire ou d'une machine agricole, comprenant
un corps d'essieu (2),
une unité formant moyeu de roue (4), laquelle est agencée sur le corps d'essieu (2),
un élément de fixation (2), afin d'immobiliser l'unité formant moyeu de roue (4) sur le corps d'essieu (2), et
un élément intermédiaire (8),
dans lequel l'élément intermédiaire (8) est agencé de manière bloquée en rotation sur le corps d'essieu (2) et est prévu entre l'élément de fixation (6) et l'unité formant moyeu de roue (4), et
dans lequel l'unité formant moyeu de roue (4) comprend une bague de palier intérieure (10) sur laquelle est agencée une bague de palier extérieure (32, 34) ou respectivement un moyeu de roue (14) avec faculté de rotation via au moins un corps de palier (12),
**caractérisé en ce que** l'élément intermédiaire (8) et la bague de palier intérieure (10) de l'unité formant moyeu de roue (4) sont reliés l'un à l'autre de manière bloquée en rotation.

2. Palier de roue selon la revendication 1, dans lequel l'élément intermédiaire (8) est réalisé comme un corps de forme annulaire.

3. Palier de roue selon l'une des revendications précédentes, dans lequel l'élément intermédiaire (8) est guidé avec possibilité de translation axiale sur le corps d'essieu (2).

4. Palier de roue selon l'une des revendications précédentes, dans lequel l'élément intermédiaire (8) comprend à sa périphérie intérieure un moyen d'engagement (22), lequel est conçu pour parvenir en engagement avec un moyen d'engagement (24) sur le corps d'essieu (2).

5. Palier de roue selon la revendication 4, dans lequel le moyen d'engagement (22) de l'élément intermédiaire (8) est réalisé sous la forme d'au moins une saillie radiale, et le moyen d'engagement (24) du corps d'essieu (2) est réalisé sous la forme d'au moins un ressaut radial.

6. Palier de roue selon la revendication 5, dans lequel le ressaut radial est réalisé sous la forme d'une gorge s'étendant axialement.

7. Palier de roue selon l'une des revendications précédentes, dans lequel l'élément intermédiaire (8) est réalisé séparément de l'unité formant moyeu de roue (4).

8. Palier de roue selon l'une des revendications précédentes, dans lequel l'élément intermédiaire (8) et la bague de palier intérieure (10) de l'unité formant moyeu de roue (4) sont réalisés d'une seule pièce l'un avec l'autre.

9. Palier de roue selon l'une des revendications précédentes, dans lequel l'élément de fixation (6) et/ou l'élément intermédiaire (8) présentent, dans la région de leur surface de contact l'un avec l'autre, une configuration de surface augmentant la friction.

10. Palier de roue selon l'une des revendications précédentes, dans lequel élément de fixation (6) est réalisé sous forme d'écrou d'essieu.

11. Palier de roue selon l'une des revendications précédentes, lequel est prévu aux deux extrémités du corps d'essieu (2), et l'élément de fixation (16) est immobilisé sur le corps d'essieu de préférence du côté gauche de l'essieu via un pas de vis à gauche et du côté droit de l'essieu via un pas de vis à droite.
